# EUROPÄISCHE PATENTANMELDUNG

(11) **EP 3 305 498 A1**
(43) Veröffentlichungstag der Anmeldung: **11.04.2018**
(21) Anmeldenummer: 17195401.9
(22) Anmeldetag: 09.10.2017
(51) Int. Cl.: B29C 45/37, B29C 33/42

(54) **KUNSTSTOFF-BAUTEIL SOWIE VERFAHREN ZUR KONTROLLE DES ORDNUNGSGEMÄSSEN VERBAUS WENIGSTENS EINES KUNSTSTOFF-BAUTEILS**

(30) Priorität: 07.10.2016 DE 102016119070; 07.11.2016 DE 102016121215
(71) Anmelder: REHAU AG + Co, 95111 Rehau (DE)
(72) Erfinder: Brinkhus, Gerhard, 26919 Brake (DE); Kilian, Winfried, 95111 Rehau (DE)

(57) **Zusammenfassung**

Die vorliegende Erfindung bezieht sich auf ein Kunststoff-Bauteil (1), vorzugsweise für ein oder in einem Kraftfahrzeug, wobei auf dem Kunststoff-Bauteil (1) eine maschinenlesbare Codestruktur (2) zur Identifizierung des Kunststoff-Bauteils (1) oder zur Identifizierung der Eigenschaften des Kunststoff-Bauteils (1) vorgesehen ist, wobei die maschinenlesbare Codestruktur (2) einstückig zusammen mit dem Kunststoff-Bauteil (1) ausgebildet, insbesondere zusammen mit dem Kunststoff-Bauteil (1) urgeformt ist. Ferner Teil der Erfindung ist ein Verfahren zur Kontrolle des ordnungsgemäßen Verbaus wenigstens eines Kunststoff-Bauteils (1) mit oder an einem Kraftfahrzeug-Verkleidungselement (3).

## Beschreibung

Kunststoff-Bauteile werden häufig per Sichtprüfung auf ihre Identität hin kontrolliert dahingehend, ob die entsprechenden Kunststoff-Bauteile oder die Variante der Kunststoff-Bauteile einer richtigen Baugruppe zugeordnet sind. Hierfür orientiert sich der menschliche Prüfer bzw. ein automatisiertes Kamerasystem primär an den äußeren Umrissen bzw. einer farblichen Gestaltung des entsprechenden Kunststoff-Bauteils. Nachteilig hieran ist, dass es unterschiedliche Varianten eines Kunststoff-Bauteils gibt, die sich jedoch nicht in der äußeren Geometrie oder Farbe des Kunststoff-Bauteils widerspiegeln. Beispielsweise kann das gleiche Servomotorgehäuse unterschiedlich stark darin aufgenommene Servomotoren aufweisen. Hierbei ist die vorgenannte Sichtprüfung dann nicht umsetzbar.

Alternativ ist es möglich per Lasergravur, Bedrucken oder dem Aufbringen eines Etikettes eine maschinenlesbare Code-Struktur auf einem Kunststoff-Bauteil anzubringen. Ein derartiges nachträgliches Anbringen birgt jedoch zum einen die Gefahr, dass trotz allem das Kunststoff-Bauteil mit einer falsch zugeordneten maschinenlesbaren Code-Struktur versehen wird. Zum anderen handelt es sich hierbei um einen nachträglichen Verfahrensschritt, welcher die Herstellungskosten steigert. Ferner kann es zu Abweichungen der Positionen der maschinenlesbaren Code-Struktur auf dem Kunststoff-Bauteil kommen, welche gegebenenfalls zu einem erschwerten bzw. unmöglichen Auslesen der maschinenlesbaren Code-Struktur durch ein Lesegerät führen kann.

Die Aufgabe der Erfindung besteht daher darin, ein Kunststoff-Bauteil gemäß des Standes der Technik dahingehend zu verbessern, dass die maschinenlesbare Code-Struktur zur Identifizierung des Kunststoff-Bauteils oder zur Identifizierung der Eigenschaften des Kunststoff-Bauteils positionsgenau und kostengünstig auf dem Kunststoff-Bauteil aufgebracht ist.

Diese Aufgabe wird erfindungsgemäß gelöst durch ein Kunststoff-Bauteil, vorzugsweise für oder in einem Kraftfahrzeug, wobei auf dem Kunststoff-Bauteil eine maschinenlesbare Code-Struktur zur Identifizierung des Kunststoff-Bauteils oder zur Identifizierung der Eigenschaften des Kunststoff-Bauteils vorgesehen ist, wobei die maschinenlesbare Code-Struktur einstückig zusammen mit dem Kunststoff-Bauteil ausgebildet, insbesondere zusammen mit dem Kunststoff-Bauteil urgeformt ist. Durch das Aufbringen der maschinenlesbaren Code-Struktur zur Identifizierung des Kunststoff-Bauteils oder zur Identifizierung der Eigenschaften des Kunststoff-Bauteils durch die einstückige Ausbildung der maschinenlesbaren Code-Struktur zusammen mit dem Kunststoff-Bauteil, insbesondere durch ein Urformen der maschinenlesbaren Code-Struktur zusammen mit dem Kunststoff-Bauteil, entfällt ein nachträgliches Einbringen der maschinenlesbaren Code-Struktur auf dem Kunststoff-Bauteil. Gleichzeitig wird hierdurch gewährleistet, dass das Kunststoff-Bauteil die maschinenlesbare Code-Struktur an der immer exakt gleichen Position aufweist.

Die maschinenlesbare Code-Struktur kann einen multi-dimensionalen Code, besonders bevorzugt einen zwei- oder dreidimensionalen Code umfassen. Dies können gestapelte Codes oder Matrix-Codes oder Matrix-Barcodes oder Punktcodes sein. Beispielhaft kann der multi-dimensionale Code ein sogenannter QR-Code (quick-response-Code) oder ein MT-Code (mobile-tagging-Code) oder ein data-matrix-Code oder ein Codablock-Code oder ein Code 49-Code oder ein MaxiCode-Code oder ein Dot-Code oder ein RM4SCC-Code oder ein Quickmark-Code oder ein Beetagg-Code oder ein Microsoft Tag-Code oder ein Trill-Code oder ein Aztec-Code oder ein Shot-Code oder ein Portable Data File-Code sein. Ausführungsformen einiger dieser Codes sind beispielhaft der US2014263674A zu entnehmen. Beispiele für das Prinzip von dreidimensionalen Codes sind der WO13191913A1, der CN105678368A oder der JP2014049063A2 zu entnehmen.

Besonders bevorzugt ist das Kunststoff-Bauteil in einem Kunststoff-Spritzgussverfahren oder einem Blasformverfahren ausgebildet. Alternativ kann das Kunststoff-Bauteil in einem generativen Fertigungsverfahren (z.B. mittels eines 3D-Druckers) ausgebildet sein.

Im Fall eines multi-dimensionalen Codes, insbesondere gestapelten Codes oder Matrix-Codes oder Matrix-Barcodes oder Punktcodes, bevorzugt eines QR-Code (quick-response-Code) oder eines MT-Code (mobile-tagging-Code) oder eines data-matrix-Code oder eines Codablock-Code oder eines Code 49-Code oder eines MaxiCode-Code oder eines Dot-Code oder eines RM4SCC-Code oder eines Quickmark-Code oder eines Beetagg-Code oder eines Microsoft Tag-Code oder eines Trill-Code oder eines Aztec-Code oder eines Shot-Code oder eines Portable Data File-Code, wird der maschinenlesbare Code durch einen Kontrastunterschied in der Helligkeit oder Farbe einzelner, benachbarter Flächen erzeugt. Im Regelfall durch eine Vielzahl von schwarzen und weißen Flächen (beispielsweise Quadraten).

Da erfindungsgemäß die maschinenlesbare Code-Struktur einstückig zusammen mit dem Kunststoff-Bauteil ausgebildet ist, gibt es diesen ausgeprägten Helligkeits- oder Farbunterschied nicht, da das Kunststoff-Bauteil und die maschinenlesbare Code-Struktur aus dem gleichen Material gebildet sind.

Bevorzugt erstreckt sich die maschinenlesbare Code-Struktur daher von der angrenzenden Oberfläche des Kunststoff-Bauteils aus nach außen und/oder nach innen oder die maschinenlesbare Code-Struktur ist bevorzugt von der angrenzenden Oberfläche des Kunststoff-Bauteils aus nach außen und/oder nach innen ausgebildet. Dies bedeutet, dass die Kontrastunterschiede durch einen Höhenunterschied innerhalb der maschinenlesbaren Code-Struktur erzeugt werden.

Bevorzugt weist die Oberfläche der maschinenlesbaren Code-Struktur ergänzend oder alternativ eine Oberflächenstrukturierung auf. Die Oberflächenstrukturierung, insbesondere die Kontrastunterschiede in der Oberflächenstrukturierung, können durch unterschiedliche Rauheitswerte einzelner Flächen der Oberfläche der Code-Struktur gebildet sein. Der sich hierdurch ausbildende Kontrast erleichtert bzw. ermöglicht die Auslesbarkeit der maschinenlesbaren Code-Struktur. Bei der Kombination von einer sich nach außen und/oder nach innen in die Oberfläche erstreckenden Code-Struktur mit einer Oberflächenstrukturierung durch unterschiedliche Rauheitswerte, weisen entsprechend die nach innen ausgebildeten Flächen einen ersten Rauheitswert und die nach außen ausgebildeten Flächen einen hiervon abweichenden zweiten Rauheitswert auf.

Erste Flächen der maschinenlesbaren Code-Struktur können einen ersten Mittenrauwert, bevorzugt zwischen 0,025 µm und 4,5 µm aufweisen, und angrenzende zweite Flächen können einen zweiten Mittenrauwert, bevorzugt zwischen 5,5 µm und 50 µm, besonders bevorzugt zwischen 6,0 µm und 35 µm aufweisen.
Die Oberflächenstrukturierung kann eine Narbstruktur und/oder eine Erodierstruktur und/oder eine Polierstruktur und/oder eine gestrahlte Struktur aufweisen.

Teil der Erfindung ist ausdrücklich auch folgendes Verfahren:

Verfahren zur Herstellung eines Kunststoff-Bauteils, vorzugsweise für ein oder in einem Kraftfahrzeug, wobei auf dem Kunststoff-Bauteil eine maschinenlesbare Code-Struktur zur Identifizierung des Kunststoff-Bauteils oder zur Identifizierung der Eigenschaften des Kunststoff-Bauteils vorgesehen ist, wobei die maschinenlesbare Code-Struktur einstückig zusammen mit dem Kunststoff-Bauteil ausgebildet, insbesondere zusammen mit dem Kunststoff-Bauteil urgeformt wird. Die Ausbildung kann insbesondere mit einem thermoplastischen Material im Spritzguss-Verfahren, im Blasformverfahren (insbesondere Extrusions-Blasformverfahren) oder in einem generativen Verfahren erfolgen.

Bevorzugt erstreckt sich die maschinenlesbare Code-Struktur von der angrenzenden Oberfläche des Kunststoff-Bauteils aus nach außen und/oder nach innen oder die maschinenlesbare Code-Struktur ist bevorzugt von der angrenzenden Oberfläche des Kunststoff-Bauteils aus nach außen und/oder nach innen ausgebildet.

Das Kunststoff-Bauteil kann insbesondere ein Sensorgehäuse, ein Steuergerätgehäuse, ein Servomotorgehäuse, ein Strukturversteifungselement, ein Verkleidungsteil, ein Spoiler, ein Lüftungsgitter, eine Randabdeckung, eine Blende, ein Grundträger, ein Schließteil, ein Lampengehäuse, ein Deckel, ein Sensorhalter, ein Antennengehäuse, ein Reflektor, eine Abgasrohrblende, eine Zierleiste, eine Kühlermaske, eine Luftführung, eine Wasserkastenabdeckung, ein Luftleitelement, ein Wasserkasten, eine Radlaufblende, eine Schwellerverkleidung oder eine Stoßfängerverkleidung sein. Das Kunststoff-Bauteil kann insbesondere ein Bestandteil eines Sensorgehäuses, eines Steuergerätgehäuses, eines Servomotorgehäuses, eines Strukturversteifungselementes, eines Verkleidungsteiles, eines Spoilers, eines Lüftungsgitters, einer Abdeckung, einer Blende, eines Grundträgers, eines Schließteils, eines Lampengehäuses, eines Deckels, eines Sensorhalters, eines Antennengehäuses, eines Reflektors, einer Abgasrohrblende, einer Zierleiste, einer Kühlermaske, einer Luftführung, einer Wasserkastenabdeckung, eines Luftleitelements, eines Wasserkastens, einer Radlaufblende, einer Schwellerverkleidung oder einer Stoßfängerverkleidung sein.

Weiter ein Teil der Erfindung ist eine Baugruppe umfassend ein Kraftfahrzeug-Verkleidungselement und mindestens ein Kunststoff-Bauteil wie vorstehend beschrieben, wobei das mindestens eine Kunststoff-Bauteil mit dem Kraftfahrzeug-Verkleidungselement verbunden und/oder an dem Kraftfahrzeug-Verkleidungselement angeordnet ist, wobei die maschinenlesbare Code-Struktur derart auf dem Kunststoff-Bauteil positioniert ist, dass die Code-Struktur von einem Lesegerät weiterhin erfassbar ist, wenn das Kunststoff-Bauteil mit dem Kraftfahrzeug-Verkleidungselement verbunden und/oder an dem Kraftfahrzeug-Verkleidungselement angeordnet ist.

Durch die erfindungsgemäße Baugruppe ist es möglich, das Kraftfahrzeug-Verkleidungselement vollautomatisiert und in einem einzigen Kontrollschritt dahingehend zu prüfen, ob die richtigen Kunststoff-Bauteile in dem Kraftfahrzeug-Verkleidungselement verbaut oder überhaupt vorhanden sind. Beispielsweise kann im Rahmen einer sog. Fließfertigung das Kraftfahrzeug-Verkleidungselement an dem Lesegerät vorbei transportiert werden und wird so ohne eine eigens eingerichtete Kontrollstation während der Fließfertigung kontrolliert.

Bei dem Kraftfahrzeug-Verkleidungselement kann es sich um eine Stoßfängerverkleidung, eine Schwellerverkleidung, eine Türverkleidung, eine Heckklappenverkleidung, eine Motorraumverkleidung, eine Kotflügelverkleidung, eine Radhausverkleidung, einen Spoiler oder einen Kühlergrill handeln.

Die maschinenlesbare Code-Struktur kann insbesondere auf einem Verbindungselement des Kunststoff-Bauteils zur Verbindung mit einem weiteren Bauteil, beispielsweise einem Kraftfahrzeug-Verkleidungselement ausgebildet sein. Das Verbindungselement ist insbesondere so ausgebildet, dass die maschinenlesbare Code-Struktur auf dem Verbindungselement nur im ordnungsgemäßen Verbindungszustand mit dem weiteren Bauteil oder mit dem Verbindungsgegenelement des weiteren Bauteils vollständig sichtbar und/oder auslesbar ist. Hierdurch kann eine menschenunabhängige Prüfung des Verbindungszustandes des Verbindungselementes zu dem weiteren Bauteil erfolgen. Wenn die maschinenlesbare Code-Struktur entsprechend nicht erkennbar ist, wird die Verbindung als fehlerhaft angezeigt. Das Anzeigen der fehlerhaften Verbindung kann beispielsweise durch eine ortsaufgelöste Beleuchtung oder anderweitige Markierung des entsprechenden Verbindungselementes erfolgen.

Weiter ein Teil der Erfindung ist die Verwendung wenigstens eines Kunststoff-Bauteils wie vorstehend beschrieben, oder die Verwendung einer Baugruppe wie vorstehend beschrieben, für oder in einem Kraftfahrzeug.

Weiterhin Teil der Erfindung ist ein Verfahren zur Herstellung eines Kunststoff-Bauteils, insbesondere wie vorstehend beschrieben, wobei auf dem Kunststoff-Bauteil eine maschinenlesbare Code-Struktur zur Identifizierung des Kunststoff-Bauteils oder zur Identifizierung der Eigenschaften des Kunststoff-Bauteils vorgesehen ist, wobei die maschinenlesbare Code-Struktur einstückig zusammen mit dem Kunststoff-Bauteil ausgebildet, insbesondere zusammen mit dem Kunststoff-Bauteil urgeformt wird. Die maschinenlesbare Code-Struktur kann einen multi-dimensionalen Code, besonders bevorzugt einen zwei- oder dreidimensionalen Code umfassen. Das Kunststoff-Bauteil wird bevorzugt in einem Kunststoff-Spritzgussverfahren oder in einem Blasformverfahren (insbesondere Extrusion-Blasformverfahren) ausgebildet. Das Kunststoff-Bauteil und die maschinenlesbare Code-Struktur können insbesondere wie vorstehend ausgeführt ausgebildet sein.

Weiter ein Teil der Erfindung ist ein Verfahren zur Kontrolle des ordnungsgemäßen Verbaus wenigstens eines Kunststoff-Bauteils wie vorstehen beschrieben mit oder an einem Kraftfahrzeug-Verkleidungselement, umfassend die folgenden Schritte:
- Verbinden und/oder Anordnen des Kunststoff-Bauteils mit und/oder an dem Kraftfahrzeug- Verkleidungselement,
- auslesen der Information der maschinenlesbaren Code-Struktur mittels eines Lesegerätes zur Identifizierung des Kunststoff-Bauteils oder zur Identifizierung der Eigenschaften des Kunststoff-Bauteils,
- vergleichen der ausgelesenen Information mit einer vorgegebenen und/oder hinterlegten Information über das mit dem Kraftfahrzeug-Verkleidungselement zu verbindenden und/oder anzuordnenden Kunststoff-Bauteil,
- ausgeben und anzeigen eines fehlerhaften Verbaus des Kunststoff-Bauteils bei einer Abweichung der ausgelesenen Information zu der vorgegebenen und/oder hinterlegten Information oder bei einer nicht erkannten, aber vorgegebenen und/oder hinterlegten Information über ein mit dem Kraftfahrzeug-Verkleidungselement zu verbindenden und/oder anzuordnenden Kunststoff-Bauteil.

Bevorzugt ist die maschinenlesbare Code-Struktur derart auf dem wenigstens einen Kunststoff-Bauteil positioniert, dass die Code-Struktur von dem Lesegerät weiterhin erfassbar ist, wenn das Kunststoff-Bauteil mit dem Kraftfahrzeug-Verkleidungselement verbunden und/oder an dem Kraftfahrzeug-Verkleidungselement angeordnet wird.

Bevorzugt sind wenigstens zwei, besonders bevorzugt wenigstens drei, besonders bevorzugt wenigstens vier Kunststoff-Bauteile vorgesehen.

Das Lesegerät kann einen Laserscanner und/oder eine Kamera und/oder einen Bildsensor umfassen.

Weiterhin Teil der Erfindung ist ein Spritzgusswerkzeug oder ein Blasformwerkzeug zur Ausbildung eines Kunststoff-Bauteils wie vorstehend beschreiben oder zur Durchführung eines Verfahrens wie vorstehend beschrieben, wobei die die maschinenlesbare Code-Struktur bildenden Ausnehmungen und/oder Ausformungen in wenigstens einer der Kavität des Werkzeugs zugewandten Werkzeughälfte eingebracht sind. Alternativ oder in Ergänzung kann die maschinenlesbare Code-Struktur durch eine Werkzeug-Oberflächenstrukturierung in wenigstens einer der Kavität des Werkzeugs zugewandten Werkzeughälfte gebildet werden. Die Oberflächenstrukturierung, insbesondere die Kontrastunterschiede in der Oberflächenstrukturierung, können durch unterschiedliche Rauheitswerte einzelner Flächen der Werkzeug-Oberfläche der wenigstens einen Werkzeughälfte gebildet sein. Der sich hierdurch ausbildende Kontrast auf dem im Spritzgusswerkzeug oder dem Blasformwerkzeug hergestellten Kunststoff-Bauteil (das die entsprechende Werkzeug-Oberflächenstrukturierung übernimmt) erleichtert bzw. ermöglicht die Auslesbarkeit der gebildeten maschinenlesbaren Code-Struktur. Erste Flächen der sich hierdurch ausbildenden maschinenlesbaren Code-Struktur können einen ersten Mittenrauwert, bevorzugt zwischen 0,025 µm und 4,5 µm aufweisen, und angrenzende zweite Flächen können einen zweiten Mittenrauwert, bevorzugt zwischen 5,5 µm und 50 µm, besonders bevorzugt zwischen 6,0 µm und 35 µm aufweisen.

Die die maschinenlesbare Code-Struktur bildenden Ausnehmungen und/oder Ausformungen und/oder die Werkzeug-Oberflächenstrukturierungen in der wenigstens einen Werkzeughälfte können durch Wechseleinsätze oder auf Wechseleinsätzen in der wenigstens einen Werkzeughälfte gebildet sein. Dies erleichtert eine Auswechslung, falls während der Fertigung des Kunststoff-Bauteils die Ausnehmungen und/oder Ausformungen und/oder Werkzeug-Oberflächenstrukturierungen beschädigt werden oder verschleißen.

Die Erfindung wird anhand der nachfolgenden lediglich Ausführungsbeispiele darstellenden Zeichnungen erläutert. Es zeigen schematisch:
- Fig. 1:: eine Ansicht der Sichtseite eines Kraftfahrzeug-Verkleidungselementes;
- Fig. 2:: eine Darstellung der der Sichtseite gegenüberliegenden Innenseite des Kraftfahrzeug- Verkleidungselementes;
- Fig. 3:: eine weitere Darstellung der der Sichtseite gegenüberliegenden Innenseite des Kraftfahrzeug- Verkleidungselementes;
- Fig. 4:: eine Querschnittsdarstellung durch ein erfindungsgemäßes Kunststoff-Bauteil im Bereich der maschinenlesbaren Code-Struktur.

In den Figuren werden gleiche oder funktionsgleiche Elemente mit den gleichen Bezugszeichen versehen.

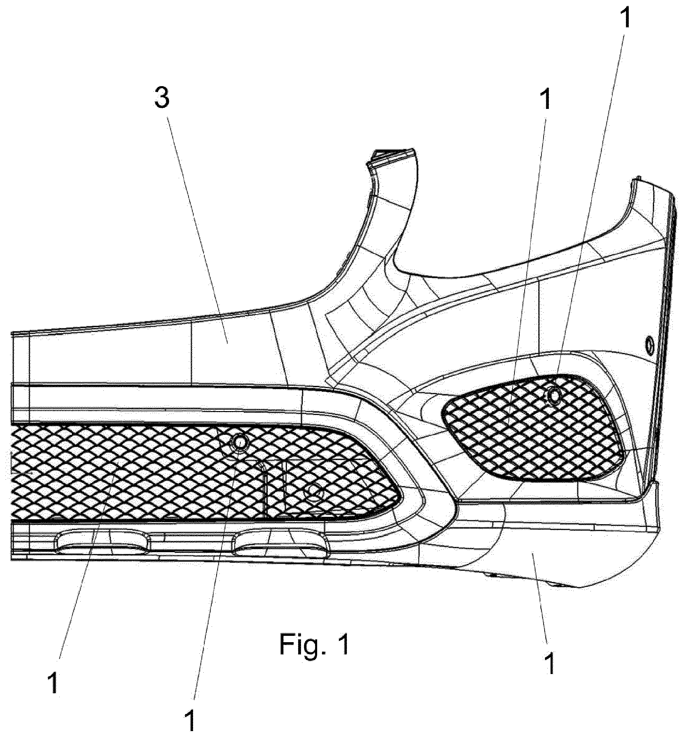

Die Fig. 1 zeigt eine Baugruppe umfassend ein Kraftfahrzeug-Verkleidungselement 3 und mindestens ein Kunststoff-Bauteil 1, wobei das mindestens eine Kunststoff-Bauteil 1 mit dem Kraftfahrzeug-Verkleidungselement 3 verbunden und/oder an dem Kraftfahrzeug-Verkleidungselement 3 angeordnet ist. Bei dem Kraftfahrzeug-Verkleidungselement 3 handelt es sich um eine Stoßfängerverkleidung und bei den Kunststoff-Bauteilen 1 um Sensorgehäuse, Steuergerätgehäuse, Kühlerschutzgitter und um eine untere Abdeckung der Stoßfängerverkleidung. Kraftfahrzeug-Verkleidungselemente 3, insbesondere Stoßfängerverkleidungen, weisen eine Vielzahl von unterschiedlichen Ausstattungsvarianten auf, sodass zum einen gar keine Sensorgehäuse oder Steuergerätgehäuse vorgesehen sind, oder variantenbedingt unterschiedliche Kühlerschutzgitter oder Abdeckblenden verbaut werden sollen. Darüber hinaus müssen die Lackierflächen der auf der Sichtseite von außen sichtbaren Bereiche des Kraftfahrzeug-Verkleidungselements 3 mit den Lackierflächen der vorlackierten sichtbaren Kunststoff-Bauteile 1 farblich übereinstimmen. Eine allein durch eine Sichtprüfung durchgeführte Kontrolle der Bestückung eines entsprechenden Kraftfahrzeug-Verkleidungselements 3 mit den korrekten Kunststoff-Bauteilen 1, die für dieses Kraftfahrzeug-Verkleidungselement 3 spezifisch vorgesehen sind, ist mithin bei steigender Zahl der Varianten und Kunststoff-Bauteile 1 stark fehlerbehaftet. Erfindungsgemäß ist bei dem Kunststoff-Bauteil 1 für ein oder in einem Kraftfahrzeug, wobei auf dem Kunststoff-Bauteil 1 eine maschinenlesbare Code-Struktur 2 zur Identifizierung des Kunststoff-Bauteils 1 oder zur Identifizierung der Eigenschaften des Kunststoff-Bauteils 1 vorgesehen ist, eine maschinenlesbare Code-Struktur 2 einstückig zusammen mit dem Kunststoff-Bauteil 1 ausgebildet, insbesondere zusammen mit dem Kunststoff-Bauteil 1 urgeformt.

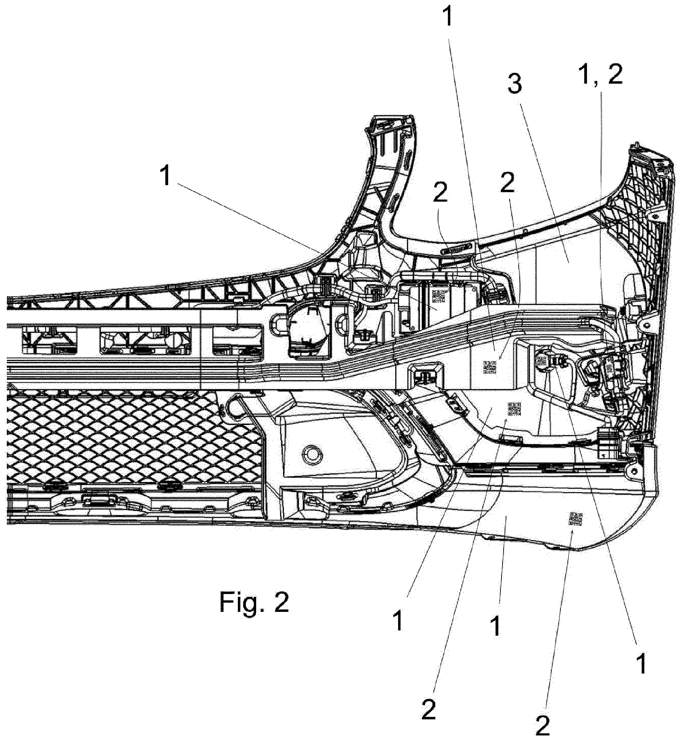

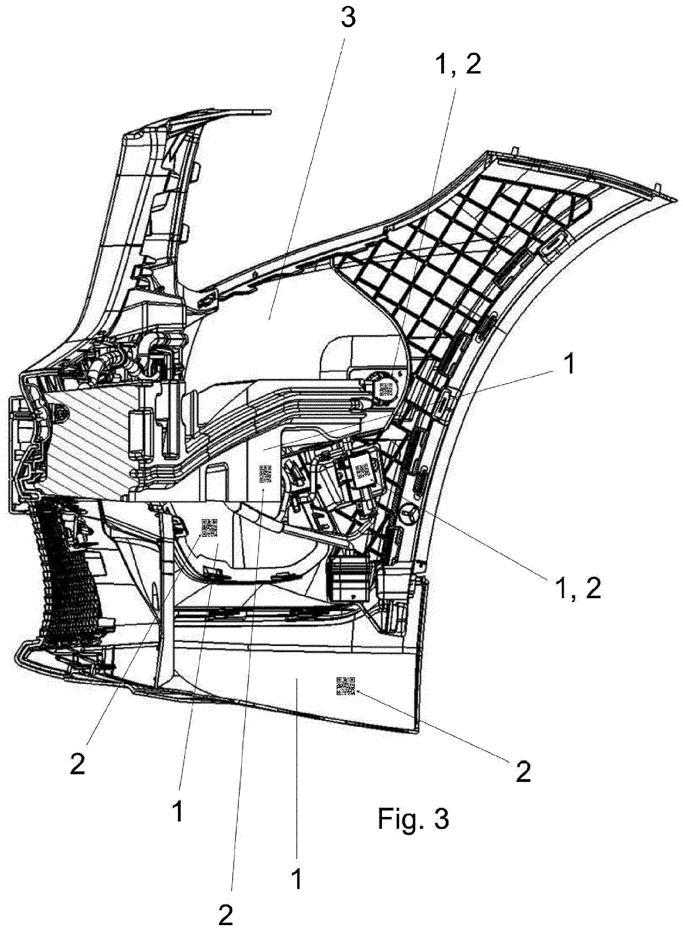

In den Figuren 2 und 3 ist die der in Fig. 1 dargestellten Sichtseite des Kraftfahrzeug-Verkleidungselements 3 gegenüberliegende Innenseite des Kraftfahrzeug-Verkleidungselements 3 dargestellt. Die mit dem Kraftfahrzeug-Verkleidungselement 3 verbundenen und/oder an dem Kraftfahrzeug-Verkleidungselement 3 angeordneten Kunststoff-Bauteile 1 weisen eine maschinenlesbare Code-Struktur 2 zur Identifizierung des jeweiligen Kunststoff-Bauteils 1 oder zur Identifizierung der Eigenschaften des jeweiligen Kunststoff-Bauteils 1 auf, wobei die maschinenlesbar Code-Struktur 2 einstückig zusammen mit dem Kunststoff-Bauteil 1 ausgebildet, insbesondere zusammen mit dem Kunststoff-Bauteil 1 urgeformt ist.

Die maschinenlesbare Code-Struktur 2 ist derart auf dem jeweiligen Kunststoff-Bauteil 1 positioniert, dass die Code-Struktur 2 von einem entsprechenden Lesegerät weiterhin erfassbar ist, wenn das Kunststoff-Bauteil 1 mit dem Kraftfahrzeug-Verkleidungselement 3 verbunden und/oder an dem Kraftfahrzeug-Verkleidungselement 3 angeordnet ist (vgl. Fig. 2 und Fig. 3).

Ein Verfahren zur Kontrolle des ordnungsgemäßen Verbaus der Kunststoff-Bauteile 1 mit oder an dem Kraftfahrzeug-Verkleidungselement 3 umfasst die folgenden Schritte:
- Verbinden und/oder Anordnen der Kunststoff-Bauteile 1 mit und/oder an dem Kraftfahrzeug-Verkleidungselement 3,
- auslesen der Information der maschinenlesbaren Code-Strukturen 2 mittels eines Lesegerätes zur Identifizierung der Kunststoff-Bauteile 1 oder zur Identifizierung der Eigenschaften der Kunststoff-Bauteile 1,
- vergleichen der ausgelesenen Informationen mit den vorgegebenen und/oder hinterlegten Informationen über das mit dem Kraftfahrzeug-Verkleidungselement 3 zu verbindenden und/oder anzuordnenden Kunststoff-Bauteile 1,
- ausgeben oder anzeigen eines fehlerhaften Verbaus der Kunststoff-Bauteile 1 bei einer Abweichung der ausgelesenen Informationen zu den vorgegebenen und/oder hinterlegten Informationen oder bei einer nicht erkannten, aber vorgegebenen und/oder hinterlegten Informationen über ein mit dem Kraftfahrzeug-Verkleidungselement 3 zu verbindenden und/oder anzuordnenden Kunststoff-Bauteil 1.

Die maschinenlesbaren Code-Strukturen 2 sind hierbei derart auf den Kunststoff-Bauteilen 1 positioniert, dass die Code-Struktur 2 von dem Lesegerät weiterhin erfasst ist, wenn das Kunststoff-Bauteil 1 mit dem Kraftfahrzeug-Verkleidungselement 3 verbunden und/oder an dem Kraftfahrzeug-Verkleidungselement 3 angeordnet wird.

Bei dem Lesegerät kann es sich insbesondere um einen Laserscanner und/oder eine Kamera und/oder einen Bildsensor handeln bzw. kann das Lesegerät einen Laserscanner und/oder eine Kamera und/oder einen Bildsensor umfassen. Versuche haben gezeigt, dass bereits mit einer Kamera eines Mobiltelefons ein erfindungsgemäßer maschinenlesbarer Code auslesbar ist.

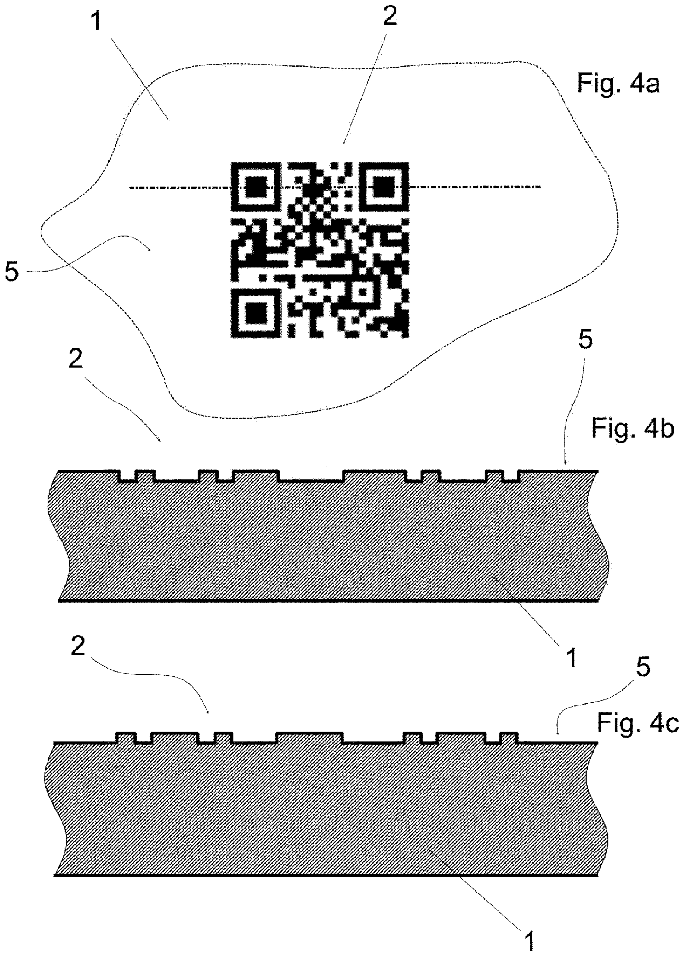

In den Darstellungen gemäß Fig. 4b und Fig. 4c ist jeweils ein möglicher Querschnitt gemäß der Schnittlinie aus Fig. 4a durch die maschinenlesbare Code-Struktur 2 eines Kunststoff-Bauteils 1 dargestellt. In den Figuren 4b und 4c ist die einstückige Ausbildung der maschinenlesbaren Code-Struktur 2 mit dem Kunststoff-Bauteil 1 ersichtlich.

Die hier gezeigten Kunststoff-Bauteile 1 sind in einem Kunststoff-Spritzgussverfahren aus einem thermoplastischen Material ausgebildet. Die maschinenlesbare Code-Struktur 2 erstreckt sich in Fig. 4b von der angrenzenden Oberfläche 5 des Kunststoff-Bauteils 1 aus nach innen oder ist nach innen ausgebildet.

Fig. 4c zeigt alternativ, dass sich die maschinenlesbare Code-Struktur 2 von der angrenzenden Oberfläche 5 des Kunststoff-Bauteils 1 nach außen erstrecken oder ausbilden kann. Insbesondere eine Ausbildung gemäß Fig. 4c ist vorteilhaft dahingehend, dass diese sich relativ einfach ausbilden lässt indem in einem entsprechenden Spritzgusswerkzeug die die maschinenlesbare Code-Struktur bildenden Ausnehmungen in einer der Kavität des Werkzeugs zugewandten Werkzeughälfte eingebracht werden (z.B. durch Ausfräsen, Abätzen mittels Säure/Lauge oder Abtragen mittels eines Laserstrahls des entsprechenden Materials in der Werkzeughälfte).

Im Rahmen der Erfindung kann sich die maschinenlesbare Code-Struktur 2 auch durch eine Mischform der in den Figuren 4b und 4c dargestellten Varianten ergeben.

Die hier nicht näher dargestellten dreidimensionalen Codes mit ihren zusätzlich unterschiedlich tiefen Ausnehmungen und/oder Ausformungen lassen sich entsprechend realisieren.

Alternativ oder in Ergänzung zu den vorstehend beschriebenen Ausbildungen weist die Oberfläche 5 der maschinenlesbaren Code-Struktur 2 eine Oberflächenstrukturierung auf. Die Oberflächenstrukturierung, insbesondere die Kontrastunterschiede in der Oberflächenstrukturierung, können durch unterschiedliche Rauheitswerte einzelner Flächen der Oberfläche der Code-Struktur 2 gebildet sein. Der sich hierdurch ausbildende Kontrast erleichtert bzw. ermöglicht die Auslesbarkeit der maschinenlesbaren Code-Struktur 2. Bei der Kombination von einer sich nach außen und/oder nach innen in die Oberfläche 5 erstreckenden Code-Struktur 2 mit einer Oberflächenstrukturierung durch unterschiedliche Rauheitswerte, weisen entsprechend die nach innen ausgebildeten Flächen einen ersten Rauheitswert und die nach außen ausgebildeten Flächen einen hiervon abweichenden zweiten Rauheitswert auf.

Erste Flächen der maschinenlesbaren Code-Struktur 2 können einen Mittenrauwert zwischen 0,025 µm und 4,5 µm aufweisen und angrenzende zweite Flächen können einen Mittenrauwert zwischen 5,5 µm und 50 µm, bevorzugt zwischen 6,0 µm und 35 µm aufweisen. In Fig. 4a weisen die weiß dargestellten ersten Flächen der Code-Struktur 2 einen Mittenrauwert zwischen 0,025 µm und 4,5 µm und die schwarz dargestellten zweiten Flächen einen Mittenrauwert zwischen 5,5 µm und 50 µm, bevorzugt zwischen 6,0 µm und 35 µm auf. Da es nur auf den Kontrastunterschied ankommt und die Bilder der Code-Struktur 2 in der Bilderfassung beim Auslesen der maschinenlesbaren Code-Struktur 2 auch durch das Lesegerät bzw. daran angeschlossene Auswerteeinheiten invertierbar sind, kann die beschriebene "schwarz-weiß" Strukturierung auch umgekehrt ausgebildet sein.

Die Oberflächenstrukturierung kann eine Narbstruktur und/oder eine Erodierstruktur und/oder eine Polierstruktur und/oder eine gestrahlte Struktur aufweisen.

## Patentansprüche

1. Kunststoff-Bauteil (1), vorzugsweise für ein oder in einem Kraftfahrzeug, wobei auf dem Kunststoff-Bauteil (1) eine maschinenlesbare Codestruktur (2) zur Identifizierung des Kunststoff-Bauteils (1) oder zur Identifizierung der Eigenschaften des Kunststoff-Bauteils (1) vorgesehen ist,
**dadurch gekennzeichnet, dass**
die maschinenlesbare Codestruktur (2) einstückig zusammen mit dem Kunststoff-Bauteil (1) ausgebildet, insbesondere zusammen mit dem Kunststoff-Bauteil (1) urgeformt ist.

2. Kunststoff-Bauteil (1) nach Anspruch 1, **dadurch gekennzeichnet, dass** die maschinenlesbare Codestruktur (2) einen multi-dimensionalen Code, besonders bevorzugt einen zwei- oder dreidimensionalen Code umfasst.

3. Kunststoff-Bauteil (1) nach Anspruch 1 oder 2 **dadurch gekennzeichnet, dass** das Kunststoff-Bauteil (1) in einem Kunststoff-Spritzgussverfahren oder einem Blasformverfahren ausgebildet ist.

4. Kunststoff-Bauteil (1) nach einem der vorstehenden Ansprüche, **dadurch gekennzeichnet, dass** sich die maschinenlesbare Codestruktur (2) von der angrenzenden Oberfläche (5) des Kunststoff-Bauteils (1) aus nach außen und/oder nach innen erstreckt oder ausbildet.

5. Kunststoff-Bauteil (1) nach einem der vorstehenden Ansprüche, **dadurch gekennzeichnet, dass** die Oberfläche der maschinenlesbaren Code-Struktur (2) eine Oberflächenstrukturierung aufweist, wobei die Oberflächenstrukturierung, insbesondere die Kontrastunterschiede in der Oberflächenstrukturierung, durch unterschiedliche Rauheitswerte einzelner Flächen der Oberfläche der Code-Struktur (2) gebildet ist.

6. Kunststoff-Bauteil (1) nach einem der vorstehenden Ansprüche, **dadurch gekennzeichnet, dass** das Kunststoff-Bauteil (1) ein Sensorgehäuse, ein Steuergerätgehäuse, ein Servomotorgehäuse, ein Strukturversteifungselement, ein Verkleidungsteil, ein Lüftungsgitter, eine Randabdeckung, eine Blende, ein Grundträger, ein Schließteil, ein Lampengehäuse, ein Deckel, ein Sensorhalter, ein Antennengehäuse, ein Reflektor, eine Abgasrohrblende, eine Zierleiste, eine Kühlermaske, eine Luftführung, eine Wasserkastenabdeckung, ein Luftleitelement, ein Wasserkasten, eine Radlaufblende, eine Schwellerverkleidung oder eine Stoßfängerverkleidung ist oder ein Bestandteil eines Sensorgehäuses, eines Steuergerätgehäuses, eines Servomotorgehäuses, eines Strukturversteifungselementes, eines Verkleidungsteiles, eines Lüftungsgitters, einer Abdeckung, einer Blende, eines Grundträgers, eines Schließteils, eines Lampengehäuses, eines Deckels, eines Sensorhalters, eines Antennengehäuses, eines Reflektors, einer Abgasrohrblende, einer Zierleiste, einer Kühlermaske, einer Luftführung, einer Wasserkastenabdeckung, eines Luftleitelements, eines Wasserkastens, einer Radlaufblende, einer Schwellerverkleidung oder einer Stoßfängerverkleidung ist.

7. Baugruppe umfassend ein Kraftfahrzeug-Verkleidungselement (3) und mindestens ein Kunststoff-Bauteil (1) nach einem der vorstehenden Ansprüche, wobei das mindestens eine Kunststoff-Bauteil (1) mit dem Kraftfahrzeug-Verkleidungselement (3) verbunden und/oder an dem Kraftfahrzeug-Verkleidungselement (3) angeordnet ist,
**dadurch gekennzeichnet, dass**
die maschinenlesbare Codestruktur derart auf dem Kunststoff-Bauteil (1) positioniert ist, dass die Codestruktur von einem Lesegerät weiterhin erfassbar ist, wenn das Kunststoff-Bauteil (1) mit dem Kraftfahrzeug-Verkleidungselement (3) verbunden und/oder an dem Kraftfahrzeug-Verkleidungselement (3) angeordnet ist.

8. Verwendung wenigstens eines Kunststoff-Bauteils (1) nach einem der Ansprüche 1 bis 6 oder einer Baugruppe nach Anspruch 7, für oder in einem Kraftfahrzeug.

9. Verfahren zur Kontrolle des ordnungsgemäßen Verbaus wenigstens eines Kunststoff-Bauteils (1) nach einem der Ansprüche 1 bis 6 mit oder an einem Kraftfahrzeug-Verkleidungselement (3), umfassend die folgenden Schritte:
- Verbinden und/oder Anordnen des Kunststoff-Bauteils (1) mit und/oder an dem Kraftfahrzeug-Verkleidungselement (3),
- auslesen der Information der maschinenlesbaren Codestruktur mittels eines Lesegerätes zur Identifizierung des Kunststoff-Bauteils (1) oder zur Identifizierung der Eigenschaften des Kunststoff-Bauteils (1),
- vergleichen der ausgelesen Information mit einer vorgegebenen und/oder hinterlegten Information über das mit dem Kraftfahrzeug-Verkleidungselement (3) zu verbindenden und/oder anzuordnenden Kunststoff-Bauteil (1),
- ausgeben oder anzeigen eines fehlerhaften Verbaus des Kunststoff-Bauteils (1) bei einer Abweichung der ausgelesene Information zu der vorgegebenen und/oder hinterlegten Information oder bei einer nicht erkannten, aber vorgegebenen und/oder hinterlegten Information über ein mit dem Kraftfahrzeug-Verkleidungselement (3) zu verbindenden und/oder anzuordnenden Kunststoff-Bauteil (1).

10. Verfahren nach Anspruch 9, **dadurch gekennzeichnet, dass** die maschinenlesbare Codestruktur (2) derart auf dem wenigstens einen Kunststoff-Bauteil (1) positioniert ist, dass die Codestruktur (2) von dem Lesegerät weiterhin erfassbar ist, wenn das Kunststoff-Bauteil (1) mit dem Kraftfahrzeug-Verkleidungselement (3) verbunden und/oder an dem Kraftfahrzeug-Verkleidungselement (3) angeordnet wird.

11. Verfahren nach Anspruch 10, **dadurch gekennzeichnet, dass** wenigstens zwei, bevorzugt wenigstens drei, besonders bevorzugt wenigstens vier Kunststoff-Bauteile (1) vorgesehen sind.

12. Verfahren nach Anspruch 10 oder 11, **dadurch gekennzeichnet, dass** das Lesegerät einen Laserscanner und/oder eine Kamera und/oder einen Bildsensor umfasst.

13. Spritzgusswerkzeug zur Ausbildung eines Kunststoff-Bauteils (1) nach einem der Ansprüche 1 bis 6, **dadurch gekennzeichnet, dass** die die maschinenlesbare Codestruktur bildenden Ausnehmungen und/oder Ausformungen und/oder eine die maschinenlesbare Codestruktur bildende Werkzeug-Oberflächenstrukturierung in wenigstens einer der Kavität des Werkzeugs zugewandten Werkzeughälfte gebildet sind oder in einer der Kavität des Werkzeuges zugewandten Werkzeughälfte eingebracht sind.
